# EUROPÄISCHE PATENTANMELDUNG

(11) **EP 3 683 720 A1**
(43) Veröffentlichungstag der Anmeldung: **22.07.2020**
(21) Anmeldenummer: 20150742.3
(22) Anmeldetag: 08.01.2020
(51) Int. Cl.: G06K 9/00, G06K 9/46

(54) **VERFAHREN UND VORRICHTUNG ZUM UNKENNTLICHMACHEN VON UMFELDDATEN FÜR EIN FAHRZEUG**

(30) Priorität: 18.01.2019 DE 102019200607
(71) Anmelder: Robert Bosch GmbH, 70442 Stuttgart (DE)
(72) Erfinder: Ewert, Marlon Ramon, 74199 Untergruppenbach (DE)

(57) **Zusammenfassung**

Die Erfindung betrifft ein Verfahren zum Unkenntlichmachen von Umfelddaten für ein Fahrzeug (100). Dabei umfasst das Verfahren einen Schritt (205) des Einlesens und einen Schritt des Ausgebens (210). Im Schritt des Einlesens (205) wird ein Unfallsignal eingelesen (125), das zumindest eine Unfallposition oder eine von einem Umfeldsensor (110) des Fahrzeugs (100) sensierte Umfeldinformation eines Unfalls repräsentiert. Im Schritt des Ausgebens (210) wird ein Unkenntlichmachungssignal (130) unter Verwendung des Unfallsignals (125) ausgegeben, wobei das Unkenntlichmachungssignal (130) dazu vorgesehen ist, um die Umfeldinformation des Unfalls an der Unfallposition zu löschen und/oder eine Funktion des Umfeldsensors (110) an der Unfallposition zu blockieren.

## Beschreibung

### Stand der Technik

Die Erfindung geht von einer Vorrichtung oder einem Verfahren zum Unkenntlichmachen von Umfelddaten für ein Fahrzeug nach Gattung der unabhängigen Ansprüche aus. Gegenstand der vorliegenden Erfindung ist auch ein Computerprogramm.

Ein hochautomatisiert fahrbares Fahrzeug ist ein Fahrzeug, das ohne Fahrer fahren kann. Das Fahrzeug fährt dabei hochautomatisiert, indem es beispielsweise den Straßenverlauf, andere Verkehrsteilnehmer oder Hindernisse selbstständig erkennt und die entsprechenden Steuerbefehle im Fahrzeug berechnet sowie diese an die Aktoren im Fahrzeug weiterleitet, wodurch der Fahrverlauf des Fahrzeugs korrekt beeinflusst wird. Der Fahrer ist bei einem hochautomatisiert fahrbaren Fahrzeug nicht am Fahrgeschehen beteiligt. Dennoch verfügt ein solches Fahrzeug über Fahrerassistenzsysteme. Fahrerassistenzsysteme sind elektronische Zusatzeinrichtungen in Kraftfahrzeugen zur Unterstützung des Fahrers in bestimmten Fahrsituationen. Hierbei stehen oft Sicherheitsaspekte, aber auch die Steigerung des Fahrkomforts im Vordergrund. Ein weiterer Aspekt ist die Verbesserung der Ökonomie.

### Offenbarung der Erfindung

Vor diesem Hintergrund werden mit dem hier vorgestellten Ansatz ein verbessertes Verfahren zum Unkenntlichmachen von Umfelddaten für ein Fahrzeug, weiterhin ein Steuergerät, das dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen des im unabhängigen Anspruch angegebenen Steuergeräts möglich.

Durch den hier vorgestellten Ansatz ist eine Möglichkeit für einen diskreten Umgang mit sensiblen Unfallinformationen geschaffen.

Es wird ein Verfahren zum Unkenntlichmachen von Umfelddaten für ein Fahrzeug vorgestellt, das einen Schritt des Einlesens und einen Schritt des Ausgebens umfasst. Im Schritt des Einlesens wird ein Unfallsignal eingelesen, das zumindest eine Unfallposition oder eine von einem Umfeldsensor des Fahrzeugs sensierte Umfeldinformation eines Unfalls repräsentiert. Im Schritt des Ausgebens wird ein Unkenntlichmachungssignal unter Verwendung des Unfallsignals ausgegeben, wobei das Unkenntlichmachungssignal dazu ausgebildet ist, um die Umfeldinformation des Unfalls an der Unfallposition zu löschen und zusätzlich oder alternativ eine Funktion des Umfeldsensors an der Unfallposition zu blockieren.

Als Umfelddaten kann beispielsweise zumindest eine Umfeldinformation bezeichnet werden, die in einem Bereich um das Fahrzeug aufgenommen oder sensiert wurde. Das Fahrzeug kann dabei beispielsweise als Transportmittel ausgeformt sein, mit dem Personen und zusätzlich oder alternativ Gegenstände transportiert werden können. Das Fahrzeug kann ein hochautomatisiert fahrbares Fahrzeug sein, das während eines Fahrbetriebs Umfelddaten in seinem Umfeld sensiert. Hierfür kann das Fahrzeug einen oder mehrere Umfeldsensoren umfassen, die beispielsweise als eine Kameraeinrichtung realisiert sein können. Als Unfallposition kann eine Position bezeichnet werden, an der ein Unfall stattfand. Der Unfall kann dabei beispielsweise als ein Zusammenstoß mehrerer Fahrzeuge oder auch als eine Panne erkannt worden sein. Vorteilhafterweise ist das Verfahren dazu ausgebildet, um Umfeldinformationen eines Unfalls zu löschen und zusätzlich oder alternativ eine Funktion des Umfeldsensors zu blockieren. Die Funktion des Umfeldsensors kann dabei beispielsweise eine Betriebsfunktion des Umfeldsensors, eine (Zwischen-)Speichervorgang, ein Übertragen der entsprechenden Daten an andere Verkehrsteilnehmer und zusätzlich oder alternativ ein Auswertevorgang der Umfeldinformationen des Unfalls sein. Ein hier vorgestelltes Verfahren kann somit vorteilhafterweise verhindern, dass sensible Informationen eines Unfalls, welche beispielsweise einen Datenschutz oder eine Privatsphäre von in den Unfall verwickelten Personen verletzen könnten, überhaupt erst erfasst, gespeichert und zusätzlich oder alternativ verbreitet werden.
Gemäß einer Ausführungsform des Verfahrens kann im Schritt des Einlesens des Unfallsignals die Unfallposition eingelesen werden, die von einer fahrzeugexternen Einrichtung und zusätzlich oder alternativ einer Cloud bereitgestellt wurde. Eine fahrzeugexterne Einrichtung kann beispielsweise eine in einem weiteren Fahrzeug vorhandene Sendeeinrichtung sein, die das Unfallsignal an das Fahrzeug bereitstellt oder übermittelt. In diesem Fall kann das Unfallsignal gemäß einer Ausführungsform über eine sogenannte "Car-to-Car-Kommunikation" zwischen Kraftfahrzeugen übermittelt werden. Gemäß einer weiteren Ausführungsform kann das Unfallsignal über eine um das Fahrzeug liegende Infrastruktur, wie beispielsweise eine Lichtzeichenanlage, an das Fahrzeug über eine sogenannte "Car-to-Infrastructure-Kommunikation" übermittelt werden. Vorteilhafterweise kann dadurch ermöglicht werden, dass das Fahrzeug rechtzeitig über den Unfall informiert ist, obwohl es sich noch nicht an der Unfallposition befindet, um beispielsweise eine alternative Route zu nehmen.

Im Schritt des Einlesens des Unfallsignals des hier vorgestellten Verfahrens kann die Umfeldinformation des Unfalls gemäß einer Ausführungsform eingelesen werden, die eine Bildinformation aufweist. Diese Bildinformation kann von dem Umfeldsensor in Form einer Kameraeinrichtung des Fahrzeugs aufgenommen worden sein. Somit kann sichergestellt werden, dass sensible Bildinformationen von der Unfallstelle gemäß einer Ausführungsform des Verfahrens im Schritt des Ausgebens gelöscht werden, ein Speichern der Bildinformation und zusätzlich oder alternativ Bereitstellen der Bildinformation an fahrzeugexterne Einrichtungen blockiert wird.

Gemäß einer Ausführungsform kann das Verfahren einen Schritt des Selektierens vor dem Schritt des Einlesens aufweisen, wobei im Schritt des Selektierens die Umfeldinformation des Unfalls von einer weiteren Umfeldinformation selektiert wird. Das bedeutet, dass im Schritt des Selektierens, der beispielsweise auch als Schritt des Auswertens oder Vergleichens bezeichnet werden kann, die Umfeldinformation des Unfalls, die beispielsweise Informationen über den Unfall selbst, beschädigte oder zerstörte Fahrzeuge, überschlagene Fahrzeuge, aber auch Fahrzeuge mit Pannen, aus einer Summe von weiteren Umfeldinformationen herausgefiltert werden können, welche keinen Unfall repräsentieren. Somit kann sichergestellt werden, dass lediglich relevante Umfeldinformationen eines Umfeldsensors, also solche Umfeldinformationen, die einen Unfall betreffen, gelöscht, oder blockiert werden, welche eine Privatsphäre eines Betroffenen verletzen könnten.

Ferner kann gemäß einer Ausführungsform im Schritt des Selektierens die Umfeldinformation des Unfalls unter Verwendung eines neuronalen Netzes, einer künstlichen Intelligenz und zusätzlich oder alternativ einer Objekterkennung selektiert werden. Vorteilhafterweise kann dadurch eine beispielsweise angelernte Situation schnell und einfach erkannt werden, was gemäß einer Ausführungsform zu einem Lernprozess des jeweiligen Systems beitragen kann.

Das hier vorgestellte Verfahren kann gemäß einer Ausführungsform weiterhin einen Schritt des Unterdrückens einer Objektidentifizierung eines Objekts an der Unfallposition aufweisen, der ansprechend auf das Unkenntlichmachungssignal folgt. Hierbei kann das Objekt beispielsweise als ein Fahrzeug, eine oder mehrere Personen und zusätzlich oder alternativ ein Nummernschild realisiert sein. Vorteilhafterweise kann auf diese Weise verhindert werden, dass eine Objektidentifizierung an Objekten durchgeführt wird, welche beispielsweise einen Datenschutz der Betroffenen verletzen würde.

Gemäß einer Ausführungsform kann im Schritt des Einlesens ein Positionssignal, das eine aktuelle Position des Fahrzeugs repräsentiert, eingelesen werden, wobei das Unkenntlichmachungssignal unter Verwendung eines Vergleichsergebnisses der Unfallposition mit der aktuellen Position ausgegeben werden kann. Dabei kann als das Positionssignal ein von einer Satellitennavigationseinrichtung bereitgestelltes Signal eingelesen werden. Das bedeutet, dass wenn sich die Unfallposition und die Position des Fahrzeugs innerhalb eines Toleranzbereichs von beispielsweise 50 Metern Abweichung decken, das Unkenntlichmachungssignal ausgegeben werden kann, da sich das Fahrzeug entweder an der Unfallposition oder in der Nähe der Unfallposition befindet. Vorteilhafterweise kann das Fahrzeug auf diese Weise kostengünstiger realisiert werden, da in diesem Fall auf einen Umfeldsensor in Form einer Kamera verzichtet werden kann. Das Unkenntlichmachungssignal kann in einem solchen Fall dazu ausgebildet sein, um beispielsweise eine Betriebsfunktion eines auf die Unfallstelle gerichteten Umfeldsensors an der Unfallposition zu deaktivieren und zusätzlich oder alternativ einen solchen Umfeldsensor abzudecken.
Gemäß einer Ausführungsform kann im Schritt des Ausgebens das Unkenntlichmachungssignal an eine Verarbeitungseinheit des Umfeldsensors ausgegeben werden. Vorteilhafterweise können auf diese Weise die Umfelddaten innerhalb der Verarbeitungseinheit des Umfeldsensors gelöscht werden.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung eines Unkenntlichmachungssignals, das dazu vorgesehen ist, um eine Umfeldinformation eines Unfalls an einer Unfallposition zu löschen und/oder eine Funktion eines Umfeldsensors an der Unfallposition zu blockieren. Hierzu kann das Steuergerät beispielsweise auf Sensorsignale wie ein Unfallsignal, das zumindest eine Unfallposition oder eine von einem Umfeldsensor des Fahrzeugs sensierte Umfeldinformation eines Unfalls repräsentiert, zugreifen. Die Ansteuerung erfolgt über Aktoren wie eine Einleseeinheit zum Einlesen des Unfallsignals und eine Ausgabeeinheit zum Ausgeben des Unkenntlichmachungssignals unter Verwendung des Unfallsignals.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Fahrzeugs mit einem Blockschaltbild eines Steuergeräts zum Unkenntlichmachen von Umfelddaten gemäß einem Ausführungsbeispiel; und
Fig. 2 ein Ablaufdiagramm eines Verfahrens zum Unkenntlichmachen von Umfelddaten für ein Fahrzeug gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

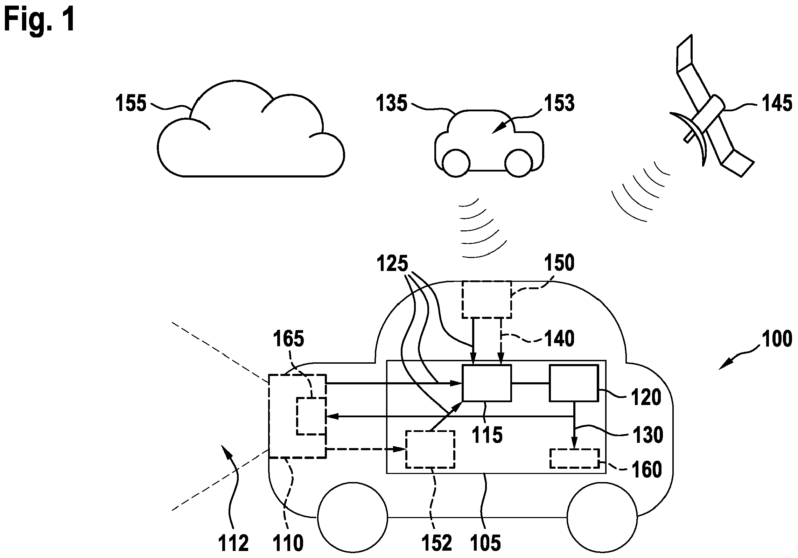

Fig. 1 zeigt eine schematische Darstellung eines Fahrzeugs 100 mit einem Blockschaltbild eines Steuergeräts 105 zum Unkenntlichmachen von Umfelddaten gemäß einem Ausführungsbeispiel. Das Fahrzeug 100 ist gemäß diesem Ausführungsbeispiel ausgebildet, um Personen und/oder Gegenstände zu transportieren. Das Fahrzeug 100 ist beispielsweise als ein hochautomatisiertes oder zumindest teilautomatisiertes Fahrzeug 100 realisiert, das beispielsweise aus sicherheitsrelevanten Aspekten Fahrerassistenzsysteme aufweist. Das Fahrzeug 100 umfasst das Steuergerät 105, das ausgebildet ist, um ein Verfahren zum Unkenntlichmachen von Umfelddaten zu steuern, indem es gemäß einem Ausführungsbeispiel mehrere Einheiten und/oder Komponenten des Fahrzeugs 100, wie beispielsweise einen Umfeldsensor 110, ansteuert. Der Umfeldsensor 110 kann gemäß einem Ausführungsbeispiel als eine Kamera ausgebildet sein, die dazu ausgebildet ist, um einen Bereich 112 eines Umfelds um das Fahrzeug 100 zu erkennen.

Das Steuergerät 105 weist dementsprechend eine Einleseeinheit 115 und eine Ausgabeeinheit 120 auf. Die Einleseeinheit 115 ist dazu ausgebildet, um ein Unfallsignal 125 einzulesen. Die Ausgabeeinheit 120 ist ausgebildet, um beispielsweise Signale wie ein Unkenntlichmachungssignal 130 an weitere Fahrzeugkomponenten auszugeben. Das Unfallsignal 125 repräsentiert entweder zumindest eine Unfallposition oder eine von dem Umfeldsensor 110 des Fahrzeugs 100 sensierte Umfeldinformation eines Unfalls, die beispielsweise in Bildform weitergegeben werden kann. Bei dem Unfall kann es sich beispielsweise um eine Panne eines weiteren Fahrzeugs 135 oder um einen Zusammenstoß mehrerer Fahrzeuge 135 handeln. Das Unkenntlichmachungssignal 130 beinhaltet einen Befehl, den das Steuergerät 105 ausgibt, um die Umfeldinformation des Unfalls an der Unfallposition zu löschen und/oder eine Funktion des Umfeldsensors 110 an der Unfallposition zu blockieren. Dadurch wird beispielsweise verhindert, dass eine Privatsphäre möglicher Unfallopfer verletzt wird.
Ferner ist die Einleseeinheit 115 des Steuergeräts 105 optional ausgebildet, um gemäß diesem Ausführungsbeispiel ein Positionssignal 140 einzulesen. Das Positionssignal 140 repräsentiert beispielsweise die aktuelle Position des Fahrzeugs 100, die gemäß diesem Ausführungsbeispiel von einer Satellitennavigationseinrichtung 145 ausgehend von dem Fahrzeug 100 empfangen wird. Gemäß diesem Ausführungsbeispiel weist das Fahrzeug 100 optional eine Empfangseinrichtung 150 auf, die dazu ausgebildet ist, um von der Satellitennavigationseinrichtung 145 bereitgestellte Fahrzeugpositionssignale, welche die aktuelle Position des Fahrzeugs 100 repräsentieren, zu empfangen und in Form des Positionssignals 140 an die Einleseeinheit 115 bereitzustellen.

Zusammengefasst erkennt der Umfeldsensor 110 den Bereich 112 des Umfelds um das Fahrzeug 100, wobei die erkannten Umfelddaten gemäß diesem Ausführungsbeispiel selektiert werden. Hierzu weist das Steuergerät 105 gemäß diesem Ausführungsbeispiel optional eine Selektiereinrichtung 152 auf, die dazu ausgebildet ist, um die erkannten Umfelddaten von dem Umfeldsensor 110 einzulesen und die einen Unfall zeigenden Umfelddaten, die auch als Umfeldinformationen des Unfalls bezeichnet werden können, von einer oder mehreren weiteren Umfeldinformation zu selektieren. Das bedeutet gemäß einem Ausführungsbeispiel, dass die Selektiereinrichtung 152 aus einer Summe von Umfelddaten diejenigen Umfelddaten selektiert, bzw. aussortiert, die eine Unfallsituation beinhalten, beispielsweise zeigen. Die aussortierten Umfelddaten werden gemäß einem Ausführungsbeispiel via Unfallsignal 125 von der Selektiereinrichtung 152 an das Steuergerät 105, bzw. die Einleseeinheit 115 bereitgestellt. Gemäß einem Ausführungsbeispiel ist die Selektiereinrichtung 152 in oder an dem Steuergerät 105 oder in oder an dem Umfeldsensor 110 angeordnet oder implementiert.

Des Weiteren ist die Empfangseinrichtung 115 dazu ausgebildet, um gemäß einem Ausführungsbeispiel ein eine Unfallposition repräsentierendes Unfallsignal 125 von der Empfangseinheit 150 des Fahrzeugs 100 zu empfangen. Gemäß diesem Ausführungsbeispiel ist die Empfangseinheit 150 dazu ausgebildet, um zumindest ein externes Signal von einer fahrzeugexternen Einrichtung 153 und/oder einer Cloud 155 zu empfangen, wobei das externe Signal die Unfallposition repräsentiert. Die Empfangseinheit 150 ist dazu ausgebildet, um die Unfallposition des externen Signals in Form des Unfallsignals 125 an die Einleseeinrichtung 115 bereitzustellen oder zu senden. Die fahrzeugexterne Einrichtung 153 kann beispielsweise das externe Signal über die Cloud 155 übermitteln. Die fahrzeugexterne Einrichtung 153 kann sich in dem weiteren Fahrzeug 135 befinden. Alternativ kann die fahrzeugexterne Einrichtung 153 beispielsweise Teil einer Lichtschaltanlage sein. Zusätzlich empfängt die Empfangseinheit 150 gemäß diesem Ausführungsbeispiel das Fahrzeugpositionssignal von der Satellitennavigationseinrichtung 145. Sowohl das Unfallsignal 125 als auch das Positionssignal 140 werden daraufhin gemäß einem Ausführungsbeispiel von der Empfangseinheit 150 an das Steuergerät 105 bereitgestellt, in dem gemäß einem optionalen Ausführungsbeispiel die durch das Unfallsignal 125 repräsentierte Unfallposition mit der via Positionssignal 140 empfangenen aktuellen Position des Fahrzeugs 100 verglichen wird. Gemäß einem Ausführungsbeispiel weist das Steuergerät 105 hierfür optional eine Vergleichseinrichtung auf, die dazu ausgebildet ist, um die Unfallposition mit der aktuellen Position des Fahrzeugs 100 zu vergleichen.

Decken sich beide Positionen oder befinden sich die beiden Positionen nahe zueinander, so wird gemäß einem Ausführungsbeispiel das Unkenntlichmachungssignal 130 von der Ausgabeeinheit 120 ausgegeben. Die Ausgabeeinheit 120 gibt gemäß diesem Ausführungsbeispiel also das Unkenntlichmachungssignal 130 aus, das dazu ausgebildet ist, um die selektierten Umfelddaten in Form der Umfeldinformationen des Unfalls zu löschen und/oder eine Funktion des Umfeldsensors 110 zu blockieren. Die Funktion kann beispielsweise ein zumindest teilweises Zwischenspeichern und/oder Auswerten und/oder dauerhaftes Speichern der Umfelddaten beinhalten. Gemäß einem Ausführungsbeispiel werden die Umfeldinformationen des Unfalls nach dem Ausgeben des Unkenntlichmachungssignals 130 also in einer sich in dem Steuergerät 105 befindlichen Unkenntlichmachungseinheit 160 oder in einer Verarbeitungseinheit 165 des Umfeldsensors 110 gelöscht oder blockiert.

In anderen Worten sind gegenwärtig verfügbare Fahrzeuge noch nicht in der Lage, hochautomatisiert oder autonom zu agieren. Zum einen, weil die entsprechende Technik noch nicht voll ausgereift ist. Zum anderen, weil es heutzutage noch gesetzlich vorgeschrieben ist, dass ein Fahrzeugführer jederzeit selbst in ein Fahrgeschehen eingreifen können muss. Dies erschwert die Umsetzung von hochautomatisiert fahrbaren Fahrzeugen. Dennoch gibt es bereits Systeme, die ein hochautomatisiertes oder teilautomatisiertes Fahren darstellen. Diese Systeme befinden sich in einer intensiven Testphase. Bereits heute ist absehbar, dass in einigen Jahren voll hochautomatisiert fahrbare Fahrzeugsysteme auf den Markt kommen werden, sobald die oben genannten Hürden aus dem Weg geräumt wurden. Solche Fahrerassistenzsysteme greifen teilautomatisiert oder hochautomatisiert in Antrieb, Steuerung (z. B. Gas, Bremse) oder Signalisierungseinrichtungen des Fahrzeuges ein oder warnen durch geeignete Mensch-Maschine-Schnittstellen, kurz "HMI", den Fahrer kurz vor oder während kritischer Situationen. Derzeit sind die meisten Fahrerassistenzsysteme so konzipiert, dass die Verantwortung beim Fahrer bleibt und dieser damit nicht entmündigt wird. Für Fahrerassistenzsysteme kommen verschiedene Arten von Umfeldsensorik zum Einsatz, unter anderem:
- Ultraschall (Einparkhilfe)
- Radar (Spurwechselassistent, automatischer Abstandswarner)
- Lidar (Totwinkel-Überwachung, automatischer Abstandswarner, Abstandsregelung, Pre-Crash und PreBrake)
- Kamera (Spurverlassenswarnung, Verkehrszeichenerkennung, Spurwechselassistent, Totwinkel Überwachung, Notbremssystem zum Fußgängerschutz)
- GNSS (Hochgenaue Fahrzeugpositionierung auf einer Karte, Steuerung eins autonomen Fahrzeugs, Safe-Stop).

Unter "Car-to-Car-Communication", kurz Car2Car oder C2C, wird ein Austausch von Informationen und Daten zwischen Kraftfahrzeugen verstanden. Ziel dieses Datenaustausches ist es, dem Fahrer frühzeitig kritische und gefährliche Situationen zu melden. Die betreffenden Fahrzeuge 100 sammeln Daten, wie ABS Eingriffe, Lenkwinkel, Position, Richtung und Geschwindigkeit, und senden diese Daten beispielsweise über Funk (WLAN, UMTS, etc.) an die anderen Verkehrsteilnehmer. Dabei soll die "Sichtweite" des Fahrers mit elektronischen Mitteln verlängert werden.

Unter Car-to-Infrastructure kurz C2I, wird der Austausch von Daten zwischen einem Fahrzeug 100 und einer umliegenden Infrastruktur, z. B. Lichtzeichenanlagen, verstanden. Die genannten Technologien basieren auf einem Zusammenwirken von Sensoren der verschiedenen Verkehrspartner und verwenden neueste Verfahren der Kommunikationstechnologie zum Austausch dieser Informationen.

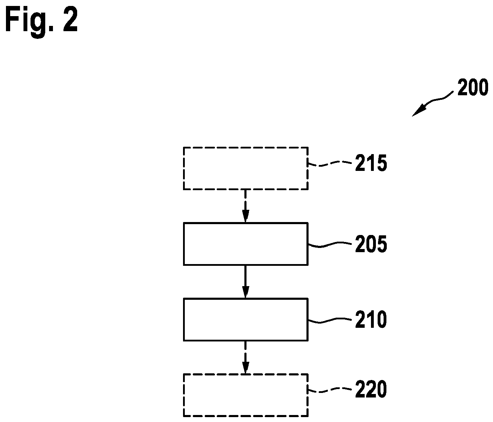

Figur 2 zeigt ein Ablaufdiagramm eines Verfahrens 200 zum Unkenntlichmachen von Umfelddaten für ein Fahrzeug gemäß einem Ausführungsbeispiel. Dieses Verfahren 200 ist von dem in Figur 1 beschriebenen Steuergerät ansteuerbar oder ausführbar. Das Verfahren 200 ist dabei in einem Fahrzeug durchführbar, wie es beispielsweise in Figur 1 beschrieben wurde.
Das Verfahren 200 umfasst dabei einen Schritt 205 des Einlesens eines Unfallsignals sowie einen Schritt 210 des Ausgebens eines Unkenntlichmachungssignals. Im Schritt 205 des Einlesens wird entweder ein Signal eingelesen, das eine Unfallposition repräsentiert, oder ein Signal, das eine von einem Umfeldsensor sensierte Umfeldinformation eines Unfalls repräsentiert. Das heißt beispielsweise, dass der Umfeldsensor eine Unfallsituation erkannt hat. Im Schritt 210 des Ausgebens wird ein Unkenntlichmachungssignal unter Verwendung des Unfallsignals ausgegeben. Dabei ist das Unkenntlichmachungssignal dazu vorgesehen oder ausgebildet, die Umfeldinformation des Unfalls an der Unfallposition zu löschen und/oder eine Funktion des Umfeldsensors an der Unfallposition zu blockieren.

Ferner umfasst das Verfahren 200 gemäß diesem Ausführungsbeispiel einen optionalen Schritt 215 des Selektierens, der gemäß einem Ausführungsbeispiel vor dem Schritt 205 des Einlesens stattfindet. Im Schritt 215 des Selektierens wird die Umfeldinformation des Unfalls von einer weiteren Umfeldinformation selektiert, wobei dies gemäß einem Ausführungsbeispiel unter Verwendung eines neuronalen Netzes und/oder einer künstlichen Intelligenz und/oder einer Objekterkennung geschehen kann.

Außerdem umfasst das Verfahren 200 gemäß diesem Ausführungsbeispiel nach dem Schritt 210 des Ausgebens einen optionalen Schritt 220 des Unterdrückens, in dem eine Objektidentifizierung eines Objekts an der Unfallposition unterdrückt wird. Eine Objektidentifizierung kann auch in einem neuronalen Netz umgesetzt werden. Das Objekt kann beispielsweise als ein Fahrzeug, eine Person, ein Nummernschild, etc. realisiert sein.

In anderen Worten kann gesagt werden, dass prototypisch eingesetzte hochautomatisierte oder teilautomatisierte Fahrzeuge mit einer Reihe von Umfeldsensoren ausgestattet sind. Diese Umfeldsensoren erkennen weitere Verkehrsteilnehmer, Fußgänger sowie Strukturen im Fahrzeugumfeld. Mit den Umfeldsensordaten erfolgt in einer intelligenten Steuerungseinheit, die auch als Steuergerät bezeichnet wird, die Steuerung eines hochautomatisiert fahrbaren oder teilautomatisiert fahrbaren Fahrzeugs entlang einer vorgeschrieben Trajektorie. Ein hochautomatisiertes Fahrzeug kann in der Praxis auch an einer Unfallstelle vorbeifahren. In diesem Fall scannen die Umfeldsensoren auch die Unfallstelle und führen eventuell eine Objektidentifizierung durch oder erkennen die Kennzeichen weiterer Verkehrsteilnehmer oder tauschen Daten mit einem noch funktionstüchtigen Unfallfahrzeug über beispielsweise eine Car-to-X Kommunikationsverbindung aus. Dies ist aus datenschutzrechtlichen Gründen und bezüglich eines Schutzes der Opfer von Nachteil. An dieser Stelle kommt der vorgestellte Ansatz zum Tragen.

Der Ansatz beschreibt ein Steuergerät und ein Verfahren 200, um Unfälle entlang einer Fahrtroute eines hochautomatisiert fahrbaren Fahrzeugs unkenntlich zu machen.

In einem Ausführungsbeispiel wird im Schritt 210 des Ausgebens eine Unfallstelle in den Umfeldsensordaten, die auch als Umfelddaten bezeichnet werden, eines an der Unfallstelle vorbeifahrenden hochautomatisierten Fahrzeugs unkenntlich gemacht. Die Umfeldsensoren, beispielsweise mit Blickrichtung auf die Unfallstelle, können dabei keine Umfelddaten des Unfallbereichs zwischenspeichern, an weitere Verkehrsteilnehmer übertragen, auswerten oder dauerhaft speichern. Auf diese Weise wird verhindert, dass ein Unfallort dauerhaft auf einer Speichereinheit im Fahrzeug oder in einer Cloud oder auf weiteren Fahrzeugen gespeichert wird oder auf einer HMI eines Fahrzeugs sichtbar ist. Die Unkenntlichmachung der Unfallstelle kann dabei auf unterschiedliche Weise erfolgen:
- Eine hochgenaue Position eines Unfallorts wird aus der Cloud heraus an die relevanten vorbeifahrenden Fahrzeuge innerhalb eines Mindestabstands zu der Unfallstelle übertragen. Die hochautomatisierten Fahrzeuge vergleichen nun die Position des Unfalls mit der eigenen Position und löschen die entsprechenden Umfelddaten unmittelbar, zum Beispiel nach Auswertung durch die künstliche Intelligenz, kurz KI, für das hochautomatisierte Fahren oder bereits davor, sofern die Unfallstelle mithilfe der Umfeldsensoren einer bestimmten Richtung sichtbar ist. Hierzu kann die Position der Unfallstelle vorab in ein Sensorkoordinatensystem mindestens eines Umfeldsensors transformiert werden. Auf diese Weise kann ein betroffener Umfeldsensor die entsprechenden Daten auch unmittelbar innerhalb der eigenen Verarbeitungseinheit löschen. Die hochgenaue Position der Unfallstelle kann beispielsweise aus einem mit der Cloud vernetzten ECall-System, unter dem ein Notrufsystem für ein Fahrzeug verstanden werden kann, stammen.
- Ein Unfallfahrzeug sendet seine Position auch nach einem Unfall weiterhin über eine Car-to-X Kommunikationsverbindung an weitere Verkehrsteilnehmer oder ein ECall-System. Ein vorbeifahrendes Fahrzeug empfängt die hochgenauen Positionsdaten über Car-To-X und stellt fest, dass es sich um ein liegen gebliebenes Fahrzeug oder Unfallfahrzeug handelt, da das Fahrzeug sich nicht bewegt aber gleichzeitig beispielsweise auf einer bestimmten Fahrspur einer Straße bezüglich der Position ist. Die vorbeifahrenden hochautomatisierten Fahrzeuge vergleichen die Position des Unfallfahrzeugs mit der eigenen Position und löschen die entsprechenden Umfeldsensordaten unmittelbar, zum Beispiel nach Auswertung durch die KI für das hochautomatisierte Fahren oder davor, sofern die Unfallstelle mithilfe der Umfeldsensoren einer bestimmten Richtung sichtbar ist. Hierzu kann die Position der Unfallstelle in ein Sensorkoordinatensystem mindestens eines Umfeldsensors transformiert werden. Auf diese Weise kann ein betroffener Umfeldsensor die entsprechenden Daten auch unmittelbar innerhalb der eigenen Verarbeitungseinheit löschen.
- Ein Umfeldsensor oder eine Verarbeitungseinheit eines Umfeldsensors ist mit einer Objekterkennungsfunktion ausgestattet. Diese Objekterkennungsfunktion basiert beispielsweise auf einer künstlichen Intelligenz, die als neuronales Netz ausgeführt sein kann und beispielsweise eine Objektidentifizierung durchführt. Im Rahmen der Fahrzeugentwicklung oder im Rahmen der Entwicklung der entsprechenden KI wird die entsprechende KI für die Objekterkennung auch mit den Daten von Unfällen gespeist. Die KI lernt in diesem Fall nicht nur die Objektidentifizierung, für die sie eigentlich vorgesehen ist, sondern auch die Erkennung von Unfällen entlang einer Fahrtroute, beispielsweise beschädigte oder zerstörte Fahrzeuge, überschlagen Fahrzeuge. Beim Lernen von Unfallstellen wird die KI beispielsweise angewiesen, auf diesen Daten keine Objektidentifizierung durchzuführen, bzw. diese Daten nicht auszuwerten oder unmittelbar zu löschen. Denkbar ist außerdem, dass für die Erkennung von Unfallszenarien basierend auf Daten mindestens eines Umfeldsensors auch eine eigene KI eingesetzt wird. Diese separate KI kann dabei die Speicherung von Umfeldsensordaten auf dem Fahrzeugzentralrechner unterbinden, wenn eine Unfallstelle in den Umfeldsensordaten mindestens eines Umfeldsensors erkannt wurde.

Sofern die entsprechenden Umfeldsensordaten vor oder nach der Auswertung unmittelbar verworfen wurden und das Fahrzeug an der Unfallstelle vorbeigefahren ist, inklusive eines Sensorsensierabstands in Gegenrichtung, können die Umfeldsensordaten wie gewohnt vollständig ausgewertet werden, an weitere Verkehrsteilnehmer übertragen werden (Car-to-X Kommunikation) und/oder zwischengespeichert bzw. dauerhaft gespeichert werden. Während der Vorbeifahrt an der Unfallstelle können nur die abgewandten Umfeldsensordaten ausgewertet, an weitere Verkehrsteilnehmer übertragen, beispielsweise mittels Car-to-X Kommunikation, oder gespeichert werden. In einem weiteren Ausführungsbeispiel erfolgt die Unkenntlichmachung von Umfeldsensordaten auch für Fahrzeuge die eine Unfallstelle aus einer Gegenrichtung passieren mit Hilfe des oben genannten Verfahrens 200. Es wird also eine Vorrichtung und ein Verfahren 200 zur Unkenntlichmachung von Unfällen entlang einer Fahrtroute eines hochautomatisierten Fahrzeugs beschrieben.

Die wesentlichen Vorteile umfassen unter anderem zumindest einen der folgenden Punkte:
- Umfeldsensordaten von an einer Unfallstelle vorbeifahrenden hochautomatisierten Fahrzeugen können bezüglich der Unfallstelle unkenntlich gemacht werden.
- Darüber hinaus wird verhindert, Unfallstellen auf einer HMI des Fahrzeugs sichtbar zu machen.
- Außerdem können die Umfeldsensordaten von Unfallstellen weder zwischengespeichert noch dauerhaft im Fahrzeug oder in der Cloud gespeichert werden.
- Die Privatsphäre/Würde von Unfallopfern wird gewährleistet.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Unkenntlichmachen von Umfelddaten für ein Fahrzeug (100), wobei das Verfahren (200) die folgenden Schritte umfasst:
- Einlesen (205) eines Unfallsignals (125), das zumindest eine Unfallposition oder eine von einem Umfeldsensor (110) des Fahrzeugs (100) sensierte Umfeldinformation eines Unfalls repräsentiert;
- Ausgeben (210) eines Unkenntlichmachungssignals (130) unter Verwendung des Unfallsignals (125), wobei das Unkenntlichmachungssignal (130) dazu vorgesehen ist, um die Umfeldinformation des Unfalls an der Unfallposition zu löschen und/oder eine Funktion des Umfeldsensors (110) an der Unfallposition zu blockieren.

2. Verfahren (200) gemäß Anspruch 1, bei dem im Schritt (205) des Einlesens des Unfallsignals (125) die Unfallposition eingelesen wird, die von einer fahrzeugexternen Einrichtung (153) und/oder einer Cloud (155) bereitgestellt wurde.

3. Verfahren (200) gemäß einem der vorangegangenen Ansprüche, bei dem im Schritt (205) des Einlesens des Unfallsignals (125) die Umfeldinformation des Unfalls eingelesen wird, die eine Bildinformation aufweist.

4. Verfahren (200) gemäß einem der vorangegangenen Ansprüche, mit einem Schritt (215) des Selektierens vor dem Schritt (205) des Einlesens, wobei im Schritt (215) des Selektierens die Umfeldinformation des Unfalls von einer weiteren Umfeldinformation selektiert wird.

5. Verfahren (200) gemäß Anspruch 4, bei dem im Schritt (215) des Selektierens die Umfeldinformation des Unfalls unter Verwendung eines neuronalen Netzes und/oder einer künstlichen Intelligenz und/oder einer Objekterkennung selektiert wird.

6. Verfahren (200) gemäß einem der vorangegangenen Ansprüche, mit einem Schritt (220) des Unterdrückens einer Objektidentifizierung eines Objekts an der Unfallposition, ansprechend auf das Unkenntlichmachungssignal (130).

7. Verfahren (200) gemäß einem der vorangegangenen Ansprüche, bei dem im Schritt (205) des Einlesens ein Positionssignal (140), das eine aktuelle Position des Fahrzeugs (100) repräsentiert, eingelesen wird, wobei das Unkenntlichmachungssignal (130) unter Verwendung eines Vergleichsergebnisses der Unfallposition mit der aktuellen Position ausgegeben wird, insbesondere wobei als das Positionssignal (140) ein von einer Satellitennavigationseinrichtung (145) bereitgestelltes Signal eingelesen wird.

8. Verfahren (200) gemäß einem der vorangegangenen Ansprüche, bei dem im Schritt (210) des Ausgebens das Unkenntlichmachungssignal (130) an eine Verarbeitungseinheit (165) des Umfeldsensors (110) ausgegeben wird.

9. Steuergerät (105), das eingerichtet ist, um die Schritte (205, 210, 215, 220) des Verfahrens (200) gemäß einem der vorangegangenen Ansprüche in entsprechenden Einheiten (115, 120,152, 160, 165) auszuführen und/oder anzusteuern.

10. Computerprogramm, das dazu eingerichtet ist, die Schritte (205, 210, 215, 220) des Verfahrens (200) gemäß einem der Ansprüche 1 bis 8 auszuführen und/oder anzusteuern.

11. Maschinenlesbares Speichermedium, auf dem das Computerprogramm nach Anspruch 10 gespeichert ist.
